# NEUE EUROPÄISCHE PATENTSCHRIFT

(11) **EP 1 273 224 B2**
(45) Veröffentlichungstag und Bekanntmachung des Hinweises auf die Entscheidung über den Einspruch: **16.03.2011**
(45) Hinweis auf die Patenterteilung: 14.09.2005
(21) Anmeldenummer: 02014570.2
(22) Anmeldetag: 01.07.2002
(51) Int. Cl.: A01J 5/013, A01J 5/007

(54) **Verfahren und Vorrichtung zur Selektion von Milch beim maschinellen Melken**
Method and apparatus for milk selection with milking machines
Méthode et appareil pour la sélection du lait avec les machines à traire

(30) Priorität: 03.07.2001 DE 10131781
(43) Veröffentlichungstag der Anmeldung: 08.01.2003
(73) Patentinhaber: GEA WestfaliaSurge GmbH, 59199 Bönen (DE)
(72) Erfinder: Redetzky, Ralf, Dr., 30559 Hannover (DE); Kaever, Peter, 59302 Oelde (DE); Suhr, Olaf, 59302 Oelde (DE)
(74) Vertreter: Neumann, Ditmar

(56) Entgegenhaltungen:
- WO-A-00/27183
- WO-A-00/67559
- WO-A1-99/31966
- DE-A- 19 630 146
- JP-A- 08 136 534
- US-A- 4 376 053
- US-A- 5 302 903
- US-A- 5 722 343

## Beschreibung

Der Gegenstand der Erfindung bezieht sich auf ein Verfahren sowie auf eine Vorrichtung zur Selektion von Milch beim maschinellen Melken.

Rohmilch ist ein bedeutsames Lebensmittel und ein wichtiger Rohstoff für die Nahrungsmittelindustrie. Zum Schutz des Verbrauchers und zur technischen Verarbeitungsfähigkeit muss Rohmilch sowohl nationalen als auch internationalen Qualitätsanforderungen genügen.

Rohmilch darf nach § 3 der Milchverordnung (Bundesrepublik Deutschland) keine anormalen sensorischen Merkmale aufweisen, so dass gemäß Anlage 3 der Milchverordnung Personen, die melken, die ersten Milchstrahlen aus jeder Zitze gesondert zu melken und sich durch Prüfen ihres Aussehens von der einwandfreien Beschaffenheit der Milch von jedem Tier zu überzeugen haben. Die ersten Milchstrahlen dürfen gemäß § 18 der Milchverordnung nicht in den Verkehr gebracht werden.

Tiere, von denen Milch als Lebensmittel gewonnen wird, dürfen nach Anlage 1 der Milchverordnung nicht an einer erkennbaren Entzündung des Euters leiden. Entsprechende Rechtsvorschriften (RL92/46 EWG, Anhang A und RL89/362 EWG, Anhang Kapitel III) kommen ebenfalls innerhalb der Europäischen Union zur Anwendung.

Anzeichen einer erkennbaren Entzündung des Euters (klinische Mastitis) sind u.a. das Vorhandensein von Flocken, bestehend aus Geweberesten, Fibrin, Zelldeutritus, Blutkoagula und Mastitiserregern im Gemelk einzelner Drüsenkomplexe, Euterviertel bzw. Euterhälften und im Gesamtgemelk einzelner Tiere.

Makroskopisch erkennbare Flocken können eine Größe von ca. 100 µm bis zu mehreren Millimetern aufweisen. Das Ansammeln solcher Flocken in bestimmten Gemelksfraktionen, vorzugsweise den Vor- und Anfangsgemelken, kann zu einem hochviskösen Sekret von mehreren Millilitern führen. Derartige Flocken sind qualitätsbestimmende Partikeln, die die Verkehrsfähigkeit von Rohmilch bestimmen und gegebenenfalls ausschließen.

Vor- und Anfangsgemelke können neben Flocken auch Partikel enthalten, die kein Anzeichen einer erkennbaren Entzündung des Euters sind, sondern als Fremdpartikel aus der Umwelt kommen. Solche Partikel können durch unzureichende Reinigungsmaßnahmen am Euter des Tieres in die Milch gelangen. Hierbei kann es sich beispielsweise um Haare, Staub, Strohpartikel, Sägespäne und Heureste handeln.

In der Praxis ist die Differenzierung zwischen qualitätsbestimmenden Partikeln und Fremdpartikeln durch Prüfen ihres Aussehens ohne nennenswerte Schwierigkeiten möglich, da sich die Partikel u.a. in Farbe, Form, Größe, Struktur und Muster zumeist erheblich voneinander unterscheiden.

Bei konventioneller Melktechnik münden gewöhnlich die kurzen Milchschläuche in einem Milchsammelstück, von wo aus die Milch in einem langen Milchschlauch der Milchleitung geführt und schließlich in einem Milchsammeltank aufgefangen, gekühlt und gelagert wird. Die Milch wird dann in entsprechenden Fachbetrieben weiterverarbeitet.

Bei automatischen Melkverfahren fehlen regelmäßig die kurzen Milchschläuche und ein Milchsammelstück, so dass die Milch jeder funktionellen Milchdrüse separat in einem Milchschlauch der Milchleitung zugeführt und schließlich in einem Milchsammeltank aufgefangen, gekühlt und gelagert wird.

Gemelke mehrerer, parallel gemolkener Tiere vermischen sich in der Milchleitung. In den Milchsammeltank gelangen sämtliche Gemelke der Tiere einer Herde, so dass die aufgefangene Milch als Herdensammelmilch bezeichnet wird.

Die Milch von Tieren mit erkennbarer Euterentzündung ist separat zu ermelken, wobei gewöhnlich in konventioneller Melktechnik dem langen Milchschlauch vor Einmündung in die Milchleitung ein Sammelbehälter (sog. "Kanne") zwischengeschaltet wird, dem die sinnfällig veränderte Milch zugeführt wird. Das Gemelk wird anschließend verworfen.

Als Entscheidungsgrundlage dient eine vorangegangene Prüfung des Aussehens gesondert gewonnenen Vorgemelks durch den Melker.

In der Praxis jedoch besteht die Gefahr, dass die visuelle Sinnfälligkeitsprüfung oftmals unterlassen wird, da sie im allgemeinen zeitaufwendig und damit unwirtschaftlich ist. Einrichtungen, die das Auffangen von Flocken ermöglichen, sind durch den Melker zu kontrollieren, was ebenfalls mit einem nicht unerheblichen Zeitaufwand verbunden ist.

Bei automatischen Melkverfahren ist die Prüfung des Aussehens gesondert gewonnenen Vorgemelks durch den Melker nicht möglich. Die bislang bekannt gewordenen technischen Vorrichtungen arbeiten unzureichend, so dass nicht gewährleistet werden kann, dass die beim automatischen Melken gewonnene Milch den nationalen und internationalen Qualitätsvorschriften entspricht.

Durch die US 4,376,053 ist ein Verfahren und eine Vorrichtung zur Bestimmung von Partikeln in der Milch bekannt. Die Vorrichtung weist eine Filtereinheit auf, die ein Filtergehäuse mit einem nach außen offenen Spalt hat. Dem Filtergehäuse ist ein Filterelement angeordnet, dass von einem Dichtungselement tragend im passenden Rahmen gehalten wird. Zur Überprüfung, ob in dem Gemelk Partikel enthalten waren, wird das Filterelement aus dem Filtergehäuse herausgenommen und einer optischen Prüfung unterzogen. Um sicherzustellen, dass die Milchleitung durch ein verstopftes Filterelement nicht blockiert wird und das Vakuum an den Melkzeugen nicht verloren geht, was zu einem Abfall der Melkzeuge führen kann, ist parallel zum Strömungsweg ein Bypass-Durchlass vorgesehen.

Eine Weiterentwicklung der durch die US 4,376,053 beschriebenen Filtereinheit ist durch die WO 00/67559 bekannt. Nach dieser Druckschrift wird eine Vorrichtung zur automatischen Milchaussonderung beim maschinellen Melken vorgeschlagen.

Durch die WO 00/67559 ist ein Verfahren zur Selektion von Milch, bei dem Milchstrom in eine Messkammer mit wenigstens einer Detektoreinheit geleitet wird, bekannt. Innerhalb der Messkammer ist ein Filterelement angeordnet. Das Filterelement ist als ein dünnes Metallplättchen mit reflektierender Oberfläche, die siebartige Bohrungen mit einem Durchmesser von 0,5 mm aufweist, ausgeführt. Die Milch, die in die Messkammer geleitet wird, durchströmt das Filterelement. Auf der Oberfläche des Filterelementes lagern sich Partikel ab. Die Oberfläche des Filters wird anschließend detektiert. In Abhängigkeit von dem Ergebnis der Detektion wird die nachfolgende Milch entweder in eine Leitung für verwertbare Milch oder in eine Leitung für nicht verwertbare Milch geleitet. Der Gesamte Milchstrom wird dabei durch die Messkammer geleitet.

Die Vorrichtung zur Selektion von Milch gemäß WO 00/67559 weist eine mit einer Milchleitung verbundene Messeinrichtung, die eine Messkammer mit einem Bodenbereich und wenigsten einer Detektoreinheit aufweist und mit einer Steuereinheit, die mit der Detektoreinheit verbunden ist, wobei die Messkammer so ausgebildet ist, dass wenigstens ein Teil einer flüssigen Phase der Milch über den Bodenbereich durchströmend aus der Messkammer abgeleitet wird und dass eine, durch die Steuereinheit steuerbare Ventileinrichtung vorgesehen ist, durch die in Abhängigkeit von dem Ergebnis einer Detektion eine Leitung für die verwertbare Milch oder eine Leitung für die nichtverwertbare Milch frei gegeben wird.

Die Bestimmung der Flocken bzw. Partikel muss tierindividuell erfolgen. Dies setzt voraus, dass eine Reinigung des Filterelementes zuverlässig und sicher erfolgen kann, ohne dass eine Kontamination nachfolgender Milchströme mit Partikeln vorhergehender Gemelke erfolgt. Die Reinigung des Filterelementes bei der durch die WO 00/67559 bekannten Vorrichtung erfolgt dadurch, dass die auf dem Filterelement liegenden Partikel durch Drehung des Filterelementes mit Hilfe des Milchstromes abgelöst werden. Alternativ hierzu kann die Reinigung des Filterelementes durch einen "Weg-Splash" erfolgen. Hierbei besteht die Gefahr, dass aus dem Milchstrom nachfolgende Partikel sich auf der Rückseite des Filterelementes niederschlagen können und dadurch zur fehlerhaften Messungen führen. Es besteht auch die Gefahr, dass partikelfreie Milchströme mit qualitätsmindemden Partikeln vorheriger Melkungen kontaminiert werden.

Durch die WO 99/31966 ist ein Verfahren und eine Vorrichtung zum Separieren von Milch bekannt. Nach diesem Verfahren wird ein erster Teil der ermolkenen Milch aus dem Milchstrom separiert und verworfen. Danach wird eine Milchprobe aus dem Milchstrom gezogen und anschließend analysiert. In Abhängigkeit von dem Ergebnis der Analyse wird entschieden, ob der Milchstrom in den Milchsammeltank für verwertbare Milch geführt oder verworfen wird.

Da nach dem Vorschlag der WO 99/31966 erst eine zweite Gemelksfraktion einer Analyse unterzogen wird, besteht die Gefahr, dass die diagnostische Sicherheit einer Sinnfälligkeitsprüfung erheblich sinkt.

Hiervon ausgehend liegt der vorliegenden Erfindung die Zielsetzung zugrunde, ein Verfahren und eine Vorrichtung anzugeben, durch die mit einfachen Mitteln die diagnostische Sicherheit einer Sinnfälligkeitsprüfung erhöht werden kann. Ein weiteres Ziel der Erfindung ist es, sicherzustellen, dass eine Kontamination nachfolgender Gemelke durch Partikel aus vorhergehenden Gemelken vermieden wird.

Erfindungsgemäß wird diese Aufgabe durch ein Verfahren mit den Merkmalen des Anspruchs 1 bzw. durch eine Vorrichtung mit den Merkmalen des Anspruchs 25 gelöst. Vorteilhafte Weiterbildungen und Ausgestaltungen des Verfahrens bzw. der Vorrichtung sind Gegenstand der jeweils abhängigen Ansprüche.

Nach einem erfindungsgemäßen Gedanken wird ein Verfahren zur Selektion von Milch vorgeschlagen, bei dem ein Milchvolumen eines Milchstroms in eine Messkammer mit wenigstens einer Detektoreinheit geleitet wird. Die flüssige (wässrige) Phase der sich in der Messkammer befindenden Milch wird aus der Messkammer geleitet. Sind beispielsweise in der ersten Fraktion eines Milchstroms Flocken bzw. Partikel enthalten, verbleiben diese in der Messkammer. Wird die gesamte wässrige Phase der Milch aus der Messkammer abgeleitet, so sammeln sich die Flocken bzw. die Partikel im Bodenbereich der Messkammer an. Zum Ableiten der Milch strömt diese über dem Bodenbereich. Nachdem wenigstens ein Teil der flüssigen Phase der sich in der Messkammer befindenden Milch aus der Messkammer abgeleitet wurde, erfolgt eine Detektion wenigstens eines Bereichs der Bodenfläche der Messkammer. Vorzugsweise wird die gesamte Bodenoberfläche der Messkammer detektiert, wodurch eine fundiertere Aussage über den Partikel bzw. den Flockengehalt in der Milch getroffen werden kann. In Abhängigkeit von dem Ergebnis der Auswertung der Detektion wird der Milchstrom entweder zum Sammelbehälter für verwertbare Milch geleitet oder verworfen. Es erfolgt ein Dekantieren der sich in der Messkammer befindenden Milch, so dass die flüssige Phase der in die Messkammer geleiteten Milchfraktion abgeleitet wird.

Durch diese erfindungsgemäße Verfahrenführung wird eine höhere diagnostische Sicherheit erreicht. Insbesondere wird durch diese Verfahrensführung auch erreicht, dass die sich im Milchvolumen befindenden Partikel bzw. Flocken keine oder nur eine sehr geringe Veränderung erfahren, so dass die in der Messkammer verbliebenen Partikel bzw. Milchflocken ihre ursprüngliche Größe bzw. Form beibehalten, wodurch eine Aussage über die tatsächlich sich in dem Milchvolumen befindenden Flocken bzw. Partikel getroffen werden kann.

Um die Abtrennung der Flocken bzw. Partikel aus der flüssigen Phase in der Messkammer zu vereinfachen und zu beschleunigen wird gemäß einer vorteilhaften Weiterbildung des Verfahrens vorgeschlagen, dass das Milchvolumen mit für die flüssige Phase durchlässigen bzw. durchgängigen Rückhaltemitteln in Kontakt gebracht wird. Vorzugsweise handelt es sich bei den Mitteln um Makro- und/oder Mikrostrukturen zwischen denen wenigstens ein Teil der flüssigen Phase geleitet werden kann. Die Makro- und/oder Mikrostrukturen können unterschiedlicher Gestalt sein. Vorzugsweise sind die Makro- und/oder Mikrostrukturen zylinderförmig ausgebildet. Es besteht auch die Möglichkeit, dass die Makrostrukturen durch die Mikrostrukturen überlagert werden. Es besteht ferner die Möglichkeit, dass die Rückhaltemittel Bereiche aufweisen, in denen jedoch Makrostrukturen und Bereiche, in denen lediglich Mikrostrukturen vorgesehen sind.

Nach einer weiteren vorteilhaften Ausgestaltung des Verfahrens wird vorgeschlagen, dass die flüssige Phase innerhalb einer vorgegebenen Zeitspanne aus der Messkammer abgeleitet wird.

Nach dem Dekantieren erfolgt eine Detektion wenigstens eines Bereichs der Bodenoberfläche der Messkammer.

Um zu vermeiden, dass die Ableitung der flüssigen Phase und/oder die Detektion durch einen nachfolgenden Milchstrom beeinflusst wird, sieht eine weitere vorteilhafte Weiterbildung des Verfahrens vor, dass der Milchstrom, nach Einleitung des Milchvolumens in die Messkammer, an dieser vorbeigeführt wird.

Insbesondere wird vorgeschlagen, dass der Milchstrom wenigstens teilweise in einer Bypass-Leitung an der Messkammer vorbeigeführt wird.

Die Messkammer weist vorzugsweise mindestens einen Füllungsstandssensor auf, der mit einer Steuereinheit verbunden ist. Durch den Füllungsstandssensor wird überprüft, ob sich in der Messkammer ein vorgegebenes Milchvolumen befindet. Ist das vorgegebene Milchvolumen erreicht worden, so wird der Milchstromzufluss unterbrochen und vorzugsweise an der Kammer vorbeigeführt. Statt eines Füllungsstandssensors zur Verifikation des vorgegebenen Milchvolumens kann auch eine Bestimmung des Milchvolumens anhand von Messdaten, insbesondere der Fließgeschwindigkeit der Milch erfolgen.

Nach einer weiteren vorteilhaften Ausbildung des Verfahrens wird vorgeschlagen, dass der Milchstrom in eine Milchleitung geführt wird. Die Messkammer ist über eine Zuleitung mit der Milchleitung verbunden, wobei die Zuleitung eine Ventileinheit aufweist, durch die die strömungstechnische Verbindung zwischen der Milchleitung und der Messkammer unterbrochen wird.

Durch diese Maßnahme wird sichergestellt, dass das sich in der Messkammer befindende Milchvolumen nicht durch den nachfolgenden Milchstrom beeinflusst wird, so dass eine relativ schnelle Beruhigung des sich in der Messkammer befindenden Milchvolumens erreicht wird, wodurch sich die in dem Milchvolumen befindenden Partikel rasch am Boden der Messkammer absetzen können.

Der Melkvorgang als solcher ist ein kontinuierlicher Vorgang und kann daher nicht für die Dauer der Messung unterbrochen werden. Um die Milchverluste möglichst gering zu halten wird vorgeschlagen, dass der Milchstrom in einen Zwischenspeicher geleitet wird. Nach erfolgter Auswertung der Detektion wird in Abhängigkeit vom Auswerteergebnis die Milch aus dem Zwischenspeicher entweder in eine Leitung für verwertbare Milch oder in eine Leitung für nicht-verwertbare Milch geführt. In Abhängigkeit von der Zeitdauer, in der die flüssige Phase aus der Messkammer abgeleitet und/oder die Detektion durchgeführt wird, kann zur Vermeidung eines höheren apparativen Aufwandes der Milchstrom der wenigstens während der Detektion der Milchleitung fließt, verworfen werden.

Nach einer noch weiteren vorteilhaften Weiterbildung des Verfahrens wird vorgeschlagen, dass der Milchstrom vor der Messkammer in einer Beruhigungsstrecke beruhigt wird. Durch diese Maßnahme wird erreicht, dass ein Absetzen der sich im Milchstrom befindenden Partikel in der Messkammer beschleunigt wird.

Beim Ableiten der sich in der Messkammer befindenden Milch, wird diese vorzugsweise über eine Kante eines Auslasses geleitet. Hierzu wird vorgeschlagen, dass der Abstand und/oder die Lage zwischen dem Boden der Messkammer und einer Kante eines Auslasses relativ zueinander veränderbar ist bzw. sind. Hierbei besteht die Möglichkeit, dass der Boden der Messkammer ortsfest, während die Kante lageveränderlich ist. Die Lageveränderung der Kante erfolgt durch geeignete Mittel, die mit einer Steuereinheit verbunden sind. Durch die Steuereinheit kann der Abstand und/oder die Lage zwischen einem Boden der Messkammer und einer Kante des Auslasses relativ zueinander gesteuert werden. Die Veränderung des Abstandes und der Lage kann kontinuierlich oder diskontinuierlich erfolgen. Hierbei kann der Ableitvorgang, insbesondere der Dekantiervorgang in Abhängigkeit vom Beruhigungsgrad des Milchvolumens in der Messkammer unterschiedlich schnell durchgeführt werden. Vorteilhaft ist, wenn am Anfang des Vorgangs die Fließgeschwindigkeit der Milch aus der Messkammer relativ groß ist und diese zum Ende des Vorgangs hin abnimmt.

Nach einer noch weiteren vorteilhaften Ausgestaltung des erfindungsgemäßen Verfahrens wird vorgeschlagen, dass nach der erfolgten Detektion und vorzugsweise nach einer Entleerung der Messkammer ein Reinigungsvorgang der Messkammer erfolgt. Hierdurch soll sichergestellt werden, dass eine Kontamination nachfolgender Milchströme nicht stattfindet.

Bevorzugt ist ein Reinigungsvorgang, bei dem wenigstens ein Reinigungsmittel durch die Messkammer geführt wird. Während des Reinigungsvorgangs ist wenigstens die Messkammer gegenüber dem Milchstrom abgeschlossen. Dadurch, dass die Messkammer gegenüber dem Milchstrom abgeschlossen ist, wird sichergestellt, dass ein Reinigungsmittel, welches durch die Messeinrichtung hindurchgeführt wird, nicht in milchführende Bauteile, insbesondere Leitungen eindringen kann. Durch das Reinigungsmittel werden die am Boden der Kammer abgelagerten Flocken bzw. Partikel gelöst und aus der Messkammer herausgetragen.

Nach einer noch weiteren vorteilhaften Ausgestaltung wird vorgeschlagen, dass nach dem wenigstens einen Reinigungsmittel Luft durch die Messkammer hindurchgeführt wird. Hierbei wird die Luft mittels einer Gebläseeinrichtung, die durch einen Filter von Staubpartikeln befreit wird, in die Messeinrichtung geleitet, um die mit Flüssigkeiten in Kontakt kommende Elemente der Messeinrichtung von Flüssigkeitsrückständen, insbesondere von Reinigungsmittelrückständen, zu befreien. Bevorzugt wird hierbei eine Verfahrensführung, bei der die Luft zuvor in der Gebläseeinrichtung erwärmt wird, insbesondere auf eine Temperatur von höchstens 45 °C. Höhere Temperaturen sind möglich, es besteht jedoch die Gefahr, dass sich die physikalisch-chemischen Eigenschaften von Milchresten so verändern, dass diese dauerhaft an den mit Flüssigkeiten in Kontakt kommenden Elemente verbleiben.

Die Reinigung erfolgt vorzugsweise derart, dass ein Reinigungsmittel die Messkammer entgegengesetzt zur Strömungsrichtung der flüssigen Phase bzw. des Milchstroms durchströmt. Hierdurch werden die abgelagerten Flocken bzw. Partikel gelöst und aus der Messkammer herausgetragen.

Vorzugsweise wird die Messkammer mittels Ventileinrichtungen, die durch eine Steuereinheit gesteuert werden, von der Milchleitung abgeschlossen, wobei die Ventileinrichtungen während des Reinigungsvorgangs geschlossen bleiben.

Es wird des weiteren vorgeschlagen, dass die Zeitspanne, die für die Detektion erforderlich ist, so kurz wie technisch möglich gehalten wird und damit möglichst geringe Milchmengen während der Detektion verworfen werden. Hierzu wird eine Milchflusserkennung vorgeschlagen, so dass eine Zeitspanne, innerhalb der ein Teil eines Milchstroms in eine Messkammer geleitet wird, auch in Abhängigkeit vom Volumenstrom des Milchstroms bestimmt werden kann. Milchflusserkennung kann auch zur Aktivierung des Verfahrens herangezogen werden. Milchflusserkennung erfolgt vorzugsweise mittels eines Milchflusssensors, der insbesondere vor der Messkammer angeordnet ist. Es besteht ferner auch die Möglichkeit, den Milchflusssensor in den Messkammereinlass der Messkammer selbst oder dem Messkammerablauf zu positionieren.

Vorzugsweise kann eine Reaktion auf das vom Milchflusssensor eingehende Signal um eine zu definierende und/oder einstellbare Zeitspanne zeitverzögert erfolgen, damit gewährleistet ist, dass eine ausreichende Menge des Vorgemelks in die Messkammer eingeleitet wird.

Gemäß einer noch weiteren vorteilhaften Ausführung des Verfahrens wird vorgeschlagen, dass der Reinigungserfolg der Messkammer durch Detektion geprüft wird und in Abhängigkeit vom Auswerteergebnis die Reinigung wiederholt werden kann. Ist festgestellt worden, dass die Reinigung unvollständig war, so wird der Reinigungsvorgang solange wiederholt, bis der gewünschte Reinigungserfolg eintritt. Die dafür verfügbare Zeitspanne wird durch die Melkdauer des Tieres und die Zeit, bis ein nachfolgendes Tier gemolken wird, limitiert.

Nach einer noch weiteren vorteilhaften Ausgestaltung des Verfahrens wird vorgeschlagen, dass die Detektion optisch erfolgt, insbesondere mit technischen Einrichtungen und bildgebenden Verfahren. Vorzugsweise sind verfahrenstechnische/technische Elemente der Photo-Optik für die Detektion geeignet. Zur Erhöhung der Messgenauigkeit können bildgebende Verfahren und weitere Methoden, die auf den Eutergesundheitsstatus des Tieres schließen lassen wie Milchtemperatur, elektrische Leitfähigkeit, Milchflussrate, Ionenkonzentrationen (z.B. bestimmt durch ionenselektive Elektroden) in Milch, Konzentrationsbestimmungen weiterer Milchinhaltsstoffe wie Ketonkörper, Laktat, Laktatdehydrogenase, NAGase (z.B. bestimmt durch Biosensoren), zur Optimierung der Messgenauigkeit ergänzt werden.

Die Auswertung der Detektion erfolgt vorzugsweise mit Hilfe von mindestens einem Bildanalyseprogramm und/oder mindestens einem Bildbearbeitungsprogramm, das/die geeignet ist/sind, durch mindestens einen zu bestimmenden Algorithmus ergänzt zu werden, die geeignet sind, durch zu bestimmende Elemente der Fuzzy Logic ergänzt und/und miteinander verbunden zu werden.

Die Messkammer der erfindungsgemäßen Vorrichtung ist so ausgebildet, dass wenigstens ein Teil einer flüssigen Phase der Milch aus der Messkammer abgeleitet wird, und dass eine, durch die Steuereinheit steuerbare Ventileinrichtung vorgesehen ist, durch die in Abhängigkeit von dem Ergebnis einer Detektion eine Leitung für die verwertbare Milch oder eine Leitung für die nicht verwertbare Milch freigegeben wird. Die Vorrichtung ist so ausgebildet, dass die Messeinrichtung eine Ablaufeinrichtung aufweist, die einen beweglichen Verschlusskörper mit einer Ablaufkante hat, so dass bei einer Bewegung des Verschlusskörpers die Ablaufkante eine im wesentlichen vertikale Lageveränderung durchführt. Dadurch, dass die Messkammer lediglich den Abfluss der flüssigen Phase ermöglicht, verbleiben Flocken oder Partikel innerhalb der Messkammer. Diese Flocken oder Partikel können mittels der Detektoreinheit detektiert werden. Es wird ein relativ genaues Ergebnis der Messung der Partikel bzw. Flocken erzielt.

Um sicherzustellen, dass lediglich die flüssige Phase der Milch aus der Messkammer abgeleitet wird, weist die Messkammer Rückhaltemittel auf, durch die Flocken und/oder Partikel zurückgehalten werden. Bevorzugt ist eine Ausgestaltung der Rückhaltemittel, bei der die Rückhaltemittel durch Strukturen, insbesondere Makro- und/oder Mikrostrukturen gebildet sind. Die Makro- und/oder Mikrostrukturen können unterschiedlicher Form oder Gestaltung sein. Die Struktur kann auch auf einem gesonderten Träger innerhalb der Messkammer angeordnet sein, der austauschbar ist. Die Rückhaltemittel, insbesondere die Strukturen, vorzugsweise die Makro- und/oder Mikrostrukturen sind im Bodenbereich der Messkammer vorgesehen.

Für eine zuverlässige Rückhaltung der Partikel bzw. Flocken wird vorgeschlagen, dass die Höhe der Strukturen bis zu 1 cm, vorzugsweise bis zu 0,8 cm, insbesondere 0,5 cm, beträgt. Bevorzugt ist dabei eine Ausbildung der Struktur, deren Höhe der Strukturen gleich ist. Dies ist jedoch nicht zwingend notwendig. Die Strukturen können auch unterschiedliche Höhen aufweisen.

Nach einer noch weiteren vorteilhaften Ausgestaltung der Vorrichtung wird vorgeschlagen, dass der Abstand der Strukturen zueinander bis zu 1 cm, vorzugsweise bis zu 0,8 cm, insbesondere 0,5 cm, beträgt.

Gemäß einer vorteilhaften Ausgestaltung der Vorrichtung wird vorgeschlagen, dass in der Milchleitung ein Strömungsleitkörper vorgesehen ist, durch den ein Milchstrom zu der Messeinrichtung hingeleitet wird. Bevorzugt ist die Ausbildung eines Strömungsleitkörpers der lageveränderlich in der Milchleitung angeordnet ist. Der Strömungsleitkörper ist dabei beweglich und kann in der Milchleitung unterschiedliche Positionen einnehmen, so dass der Strömungswiderstand unterschiedlich sein kann. Er ist vorzugsweise temporär und in die Milchleitung wenigstens teilweise einführbar.

Gemäß einer weiteren vorteilhaften Ausgestaltung der Vorrichtung wird vorgeschlagen, dass zwischen der Milchleitung und der Messeinrichtung ein Reservoir vorgesehen ist. Dieses Reservoir kann zur Beruhigung der Strömung vor dem Eintritt der Milch der Messkammer dienen.

Nach einer noch weiteren vorteilhaften Ausgestaltung der Vorrichtung wird vorgeschlagen, dass stromabwärts des Anschlusses der Messeinrichtung die Milchleitung ist ein Zwischenspeicher vorgesehen, der mit der Milchleitung verbunden ist, wobei nach erfolgter Auswertung der Detektion in Abhängigkeit vom Auswerteergebnis Milch aus dem Zwischenspeicher entweder in eine Leitung für verwertbare Milch oder in eine Leitung für nicht-verwertbare Milch geführt wird.

Gemäß einer weiteren vorteilhaften Ausgestaltung der Vorrichtung wird vorgeschlagen, dass die Messeinrichtung über eine Zuleitung mit der Milchleitung verbunden und in der Zuleitung eine Ventileinheit angeordnet ist. Durch diese Maßnahme kann der Milchstrom in der Milchleitung an der Messeinrichtung vorbeigeführt werden. Handelt es sich bei der Ventileinheit um eine Mehrwegeeinheit, so kann diese Leitung für ein Reinigungsmittel verbunden sein. Durch eine entsprechende Schaltung der Ventileinheit wird sichergestellt, dass während eines Reinigungsvorgangs kein Reinigungsmittel in die Milchleitung gelangt.

Bevorzugt ist eine Weiterbildung der Vorrichtung, bei der die Ablaufeinrichtung mit der Steuereinheit verbunden ist, so dass der Bewegungsablauf des Verschlusskörpers durch die Steuereinheit gesteuert wird.

Nach einer noch weiteren vorteilhaften Ausgestaltung der Vorrichtung wird vorgeschlagen, dass in der Messkammer ein der Detektoreinheit gegenüberliegender Bereich vorgesehen ist, der aus einer Horizontalen auslenkbar ist. Dies hat den Vorteil, dass in Abhängigkeit vom Neigungswinkel ein Wegschwemmen herabgesunkener Partikel verhindert wird. Dies kann auch dadurch erreicht werden, dass die Messkammer und/oder ein der Detektoreinheit gegenüberliegende Bereich eine im wesentlichen horizontal verlaufende Achse auslenkbar ist. Durch diese vorteilhafte Ausgestaltung der Vorrichtung wird zum einen erreicht, dass ein Wegschwemmen zurückgehaltener Partikel verhindert und zum anderen die Reinigung erleichtert wird, wenn die Messkammer und/oder ein der Detektoreinheit gegenüberliegende Bereich in eine entgegengesetzte Richtung verschwenkt wird.

Gemäß einer noch weiteren vorteilhaften Ausgestaltung der Vorrichtung wird vorgeschlagen, dass die Messkammer eine Detektoreneinheit gegenüberliegenden Bereich aufweist und die Detektoreinheit und der Bereich relativ zueinander beweglich sind. Hierdurch kann der Abstand zwischen der Detektoreinheit und dem gegenüberliegenden Bereich für eine Detektion verändert werden.

Der der Detektoreinheit gegenüberliegende Bereich der Messkammer ist vorzugsweise durch eine Auflage, die am Messkammerboden angeordnet ist, gebildet. Vorzugsweise ist die Auflage beweglich. Dies umfasst auch, dass die Auflage in ihrem Neigungswinkel veränderbar sein kann, damit das Abfließen einer wässrigen Phase der Milch erleichtert und/oder das Abschwemmen der abgesunkenen Partikel verhindert wird. Des weiteren kann die Auflage drehbar sein, um eine vollständige Detektion zu erreichen.

Die Auflage ist derart ausgebildet, dass sie in ihrer Oberflächenbeschaffenheit so strukturiert ist, dass sie geeignet ist, herabgesunkene Partikel von einem Abschwemmen zu behindern. Die Auflage kann ferner einen dunklen Farbeindruck oder einen hellen Farbeindruck oder in einer zu bestimmenden geometrischen Anordnung Felder mit einem dunklen und einem hellen Farbeindruck aufweisen, um einen Kontrast zu den Farbeindrücken abgelagerte Partikel zu ermöglichen.

Nach einer noch weiteren vorteilhaften Ausgestaltung der Vorrichtung wird vorgeschlagen, dass diese eine Reinigungseinrichtung aufweist. Die Reinigungseinrichtung weist vorzugsweise eine Leitung für ein Reinigungsmittel auf. Die Messeinrichtung ist im Strömungsweg des Reinigungsmittels angeordnet. Im Bereich vor und hinter der Messeinrichtung ist jeweils eine Ventileinheit vorgesehen. Diese Ventileinheiten sind mit der Steuereinheit verbunden, so dass die Messeinrichtung entweder mit der Milchleitung oder der Leitung für ein Reinigungsmittel verbunden oder vollständig von sämtlichen Leitungswegen abgeschlossen wird.

Durch diese vorteilhafte Ausbildung der Vorrichtung wird sichergestellt, dass die auf dem Boden der Messkammer oder auf der Auflage Flocken bzw. Partikel nicht in die Milchleitung gelangen. Es wird weiterhin sichergestellt, dass die Detektion nicht durch die Messkammer durchströmende Milch gestört wird. Des weiteren wird eine Kontamination der milchführenden Leitungen in ein Reinigungsmittel bzw. eine Reinigungsflüssigkeit verhindert und damit eine physikalische Trennung zwischen dem reinigungsmittelführenden Teilen und den milchführenden Teilen während eines Reinigungsvorgangs erreicht.

Nach einer noch weiteren vorteilhaften Ausbildung der Vorrichtung wird vorgeschlagen, dass die Vorrichtung eine Gebläseeinrichtung aufweist, die mit der Messeinrichtung verbunden ist. Durch die Gebläseeinrichtung wird ein Luftstrom durch die Messeinrichtung geführt. Die Gebläseeinrichtung kann eine Heizeinrichtung aufweisen, so dass der Luftstrom durch die Messeinrichtung geführt wird. Die Messeinrichtung ist gegenüber der Gebläseeinrichtung durch eine Ventileinrichtung abtrennbar.

Die Messkammer der erfindungsgemäßen Vorrichtung ist vorzugsweise so ausgebildet, dass sie ein Bestandteil eines Dekanters ist. Hierdurch wird erreicht, dass auf gesonderte Filterelemente verzichtet werden kann, die problematisch zu reinigen sind. Des weiteren wird mit einfachen Mitteln sichergestellt, dass eine zuverlässige Auswertung der Detektion erfolgt, so dass die diagnostische Sicherheit weiter erhöht wird.

Nach einer noch weiteren vorteilhaften Ausgestaltung der Vorrichtung wird vorgeschlagen, dass eine Bypass-Leitung vorgesehen ist, durch die der Milchstrom wahlweise in die Messeinrichtung oder wenigstens teilweise durch die Bypass-Leitung geführt wird und durch die eine stromabwärts der Mündung der Bypass-Leitung in der Milchleitung angeordnete, durch die Steuereinheit steuerbare Ventileinrichtung, durch die in Abhängigkeit von dem Ergebnis der Detektion eine Leitung für die verwertbare Milch oder eine Leitung für die nicht verwertbare Milch freigegeben wird.

Die erfindungsgemäße Vorrichtung zur Selektion von Milch weist einen relativ einfachen konstruktiven Aufbau auf. Sie ermöglicht die Bestimmung der Verkehrsfähigkeit der Milch zu Beginn eines Melkvorgangs, indem sie qualitätsbestimmende Partikel detektierte. Die Bestimmung der Partikel erfolgt mittels der Detektoreinheit.

Um das Ableiten der flüssigen Phase aus der Messkammer effektiver zu gestalten, wird vorgeschlagen, dass die Messeinrichtung, insbesondere die Messkammer zusätzliche Mittel aufweist, die dies bewirken. Insbesondere wird vorgeschlagen, dass die Vorrichtung eine mit der Messeinrichtung, insbesondere mit der Messkammer zusammenwirkende Vibrationseinrichtung aufweist, durch die Vibrationen in die sich in der Messkammer befindende Milch eingeleitet werden. Alternativ oder zusätzlich kann die Messeinrichtung einen Separator oder eine rotierende Mechanik aufweisen, die durch Zentrifugalkräfte eine Abtrennung der flüssigen Phase aus dem Milchvolumen bewirkt.

Gemäß einer noch weiteren vorteilhaften Ausgestaltung der Vorrichtung wird vorgeschlagen, dass die Wandung der Messkammer wenigstens teilweise hydrophob ausgebildet ist. So kann die Wandung mit einer entsprechenden Beschichtung ausgebildet sein. In ähnlicher Weise wird die Beschichtung mit hydrophilen bzw. lipophilen oder lipophoben Beschichtungen vorgesehen.

Die Oberfläche der Rückhaltemittel, insbesondere der Struktur, vorzugsweise der Makro- und/oder Mikrostrukturen ist wenigstens teilweise ausgebildet, so dass diese eine Rückhaltefunktion erfüllen, durch die die Partikel und Flocken an den Rückhaltemitteln zurückgehalten werden.

Um die Vorrichtung für unterschiedliche Verwendungszwecke einsetzen zu können, wird vorgeschlagen, dass die Rückhaltemittel, insbesondere die Strukturen, vorzugsweise die Makro- und/oder Mikrostrukturen verstellbar ausgebildet sind. Durch diese kann auch eine gezielte Durchlässigkeit der Rückhaltemittel erreicht werden, so dass Flocken und/oder Partikel lediglich ab einer bestimmten Größe zurückgehalten werden.

Die verstellbare Abbildung der Rückhaltemittel vereinfacht auch den Reinigungsprozess, da diese vorzugsweise vollständig aus der Kammer entfernt werden können, so dass die Wandung der Messkammer einfacher und effektiver gereinigt werden kann. Der Reinigungseffekt wird auch durch die Ausbildung der Wandung mit Hilfe spezieller Beschichtungen oder durch gezielte Vibration bzw. Bewegung erhöht.

Weitere Einzelheiten und Merkmale der Erfindung werden anhand der in der Zeichnung dargestellten Ausführungsbeispiele erläutert, ohne dass der Gegenstand der Erfindung auf diese bevorzugten Ausführungsbeispiele beschränkt wird.

Es zeigen:
Fig. 1 schematisch eine Vorrichtung zur Selektion von Milch,
Fig. 2a - 2r Momentaufnahmen während eines Betriebes der Vorrichtung nach Fig. 1,
Fig. 3 Rückhaltemittel in einer Vorderansicht und
Fig. 4 Rückhaltemittel in einer Draufsicht.

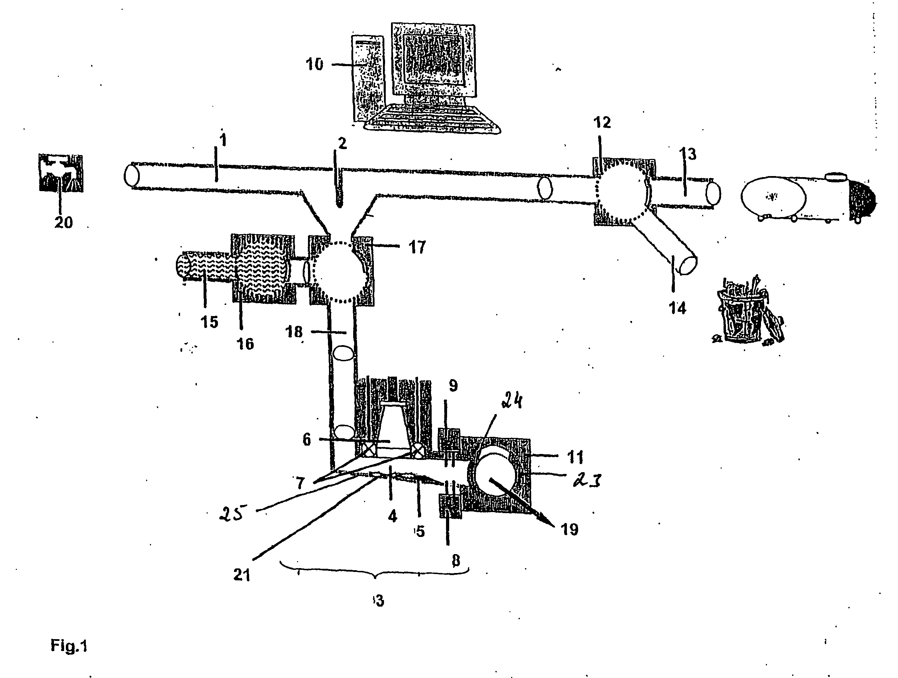

Fig. 1 zeigt schematisch ein bevorzugtes Ausführungsbeispiel einer Vorrichtung zur Selektion von Milch. Die Vorrichtung umfasst eine Milchleitung 1. Die Milchleitung 1 ist über eine Zuleitung 18 der Messeinrichtung 3 verbunden.

Stromabwärts der Zuleitung 18 weist die Milchleitung 1 eine Ventileinrichtung 12 auf, die durch eine Steuereinheit 10 gesteuert wird. Durch die Ventileinrichtung 12 wird der Milchstrom in Abhängigkeit von dem Ergebnis einer Detektion in eine Leitung 13 für verwertbare Milch oder in eine Leitung 14 für nicht verwertbar Milch geleitet.

Fig. 1 zeigt, dass in der Milchleitung 1 ein Strömungsleitkörper 2 angeordnet ist. In dem Übergangsbereich zwischen der Milchleitung 1 und der Zuleitung 18 ist ein Reservoir 22 vorgesehen.

In dem dargestellten Ausführungsbeispiel ragt der Strömungsleitkörper 2 radial einwärts von einer Wandung der Milchleitung 1 diese teilweise in das Reservoir 22 hinein. Im dargestellten Ausführungsbeispiel ist der Strömungsleitkörper 2 ortsfest an der Milchleitung angeordnet. Alternativ kann der Strömungsleitkörper 2 beweglich ausgebildet sein. Er kann in die Milchleitung 1 ein- und ausführbar sein. Dieser kann durch eine entsprechende Betätigungseinheit mit der Steuereinheit 10 verbunden sein, so dass der Strömungsleitkörper 2 in Abhängigkeit vom Verfahrensstand die Lage verändert. Vorzugsweise ist der Strömungsleitkörper 2 so ausgebildet, dass er in Abhängigkeit von seiner Lage der Milchleitung 1 strömenden Milch einen unterschiedlichen Strömungswiderstand bietet.

Zwischen dem Reservoir 22 und der Messeinrichtung 3 ist eine Ventileinheit 17 vorgesehen. In dem dargestellten Ausführungsbeispiel ist die Ventileinheit 17 über nicht dargestellte Signalleitungen mit der Steuereinheit 10 verbunden.

Die Messeinrichtung 3 weist eine Messkammer 4 auf, die mit der Zuleitung 18 verbunden ist. Die Messeinrichtung 3 weist eine Detektoreinheit 6 auf. Bei der Detektoreinheit 6 handelt es sich in dem dargestellten Ausführungsbeispiel um eine optische Detektoreinheit. Neben der Detektoreinheit 6 sind Beleuchtungseinheiten 7 dargestellt.

Die Messeinrichtung 3 weist vorzugsweise wenigstens einen Füllungsstandssensor, 9 auf. In dem dargestellten Ausführungsbeispiel sind zwei Füllungsstandssensoren 8, 9 vorgesehen. Die Füllungsstandssensoren 8, 9 sind über nicht dargestellte Signalleitungen mit der Steuereinheit 10 verbunden. Der Füllungsstandssensor 9 detektiert den höchsten Füllungsstand in der Kammer 4. Der Füllungsstandsensor 8 detektiert den niedrigsten Füllungsstand in der Messkammer 4. Die Messkammer 4 ist ein Bestandteil eines Dekanters.

Die Messeinrichtung 3 weist eine Ablaufeinrichtung 11 auf, durch die Milch aus der Messkammer 4 ablaufen kann. Die Ablaufeinrichtung 11 weist einen beweglichen Verschlusskörper 23 mit einer Ablaufkante 24 auf. Der Verschlusskörper 23 ist beweglich ausgebildet, so dass die Ablaufkante 24 eine im wesentlichen vertikale Lageveränderung durchführt. Die Einrichtung 11 ist mit der Steuereinheit 10 verbunden.

In dem dargestellten Ausführungsbeispiel ist auf Böden 25 der Messkammer 4 eine Auflage 5 angeordnet. Die Auflage 5 ist im wesentlichen eben und horizontal positioniert. Der Boden 25 der Messkammer ist zur Ablaufeinrichtung 11 hingeneigt. Die Auflage 5 bedeckt teilweise den Boden 25. Sie ist gegenüberlegend der Detektoreinheit 6 positioniert.

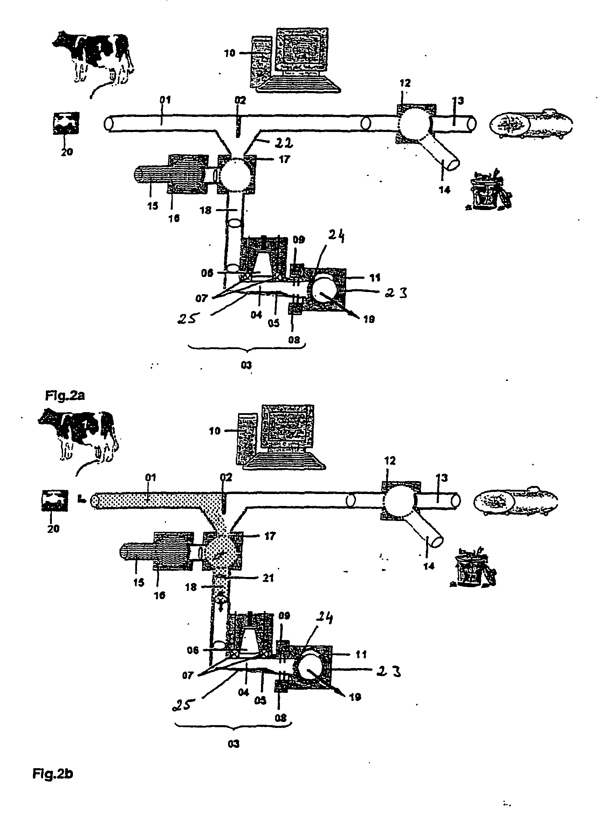

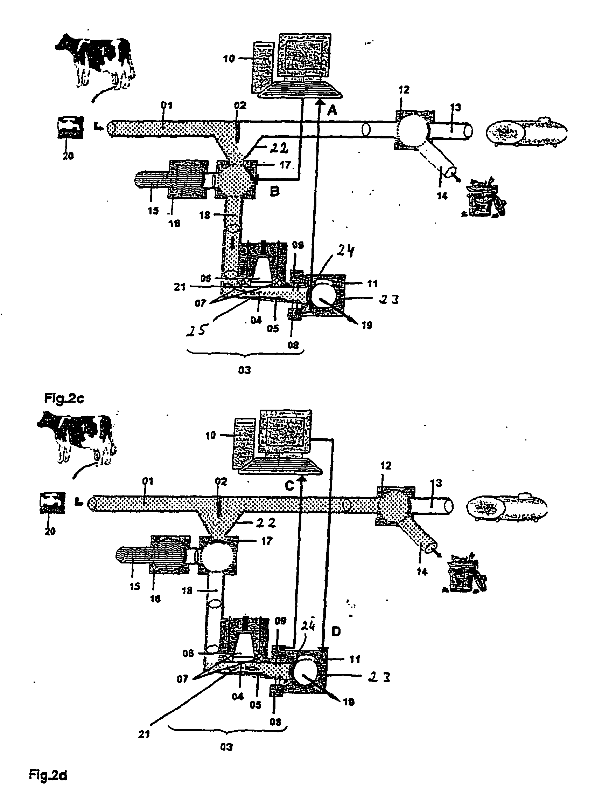

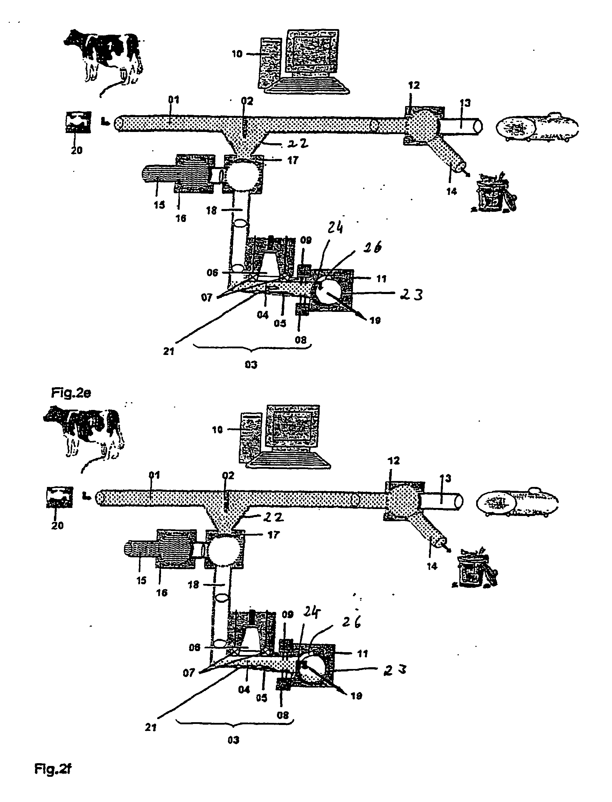

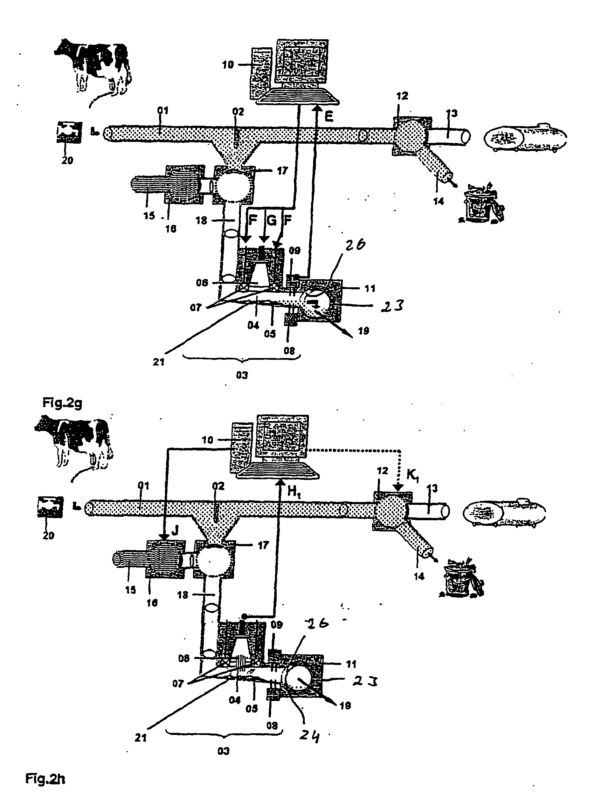

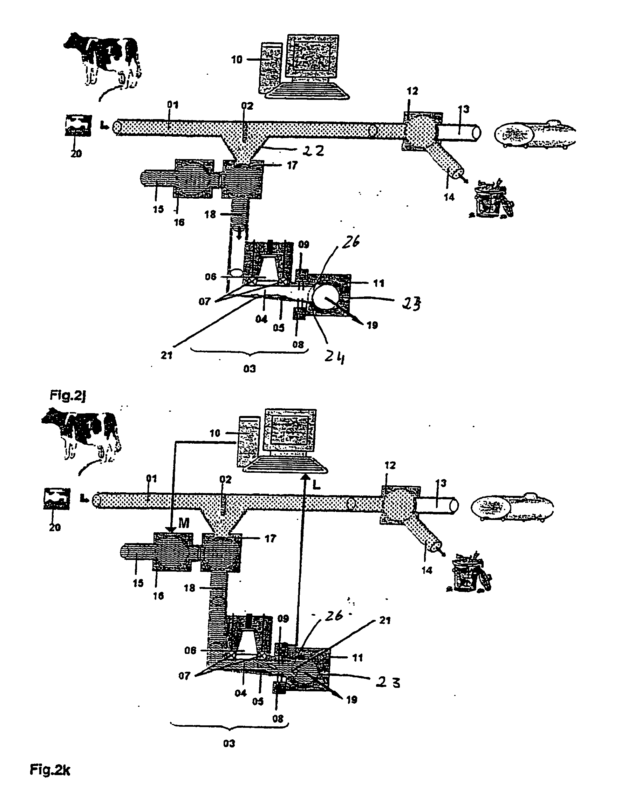

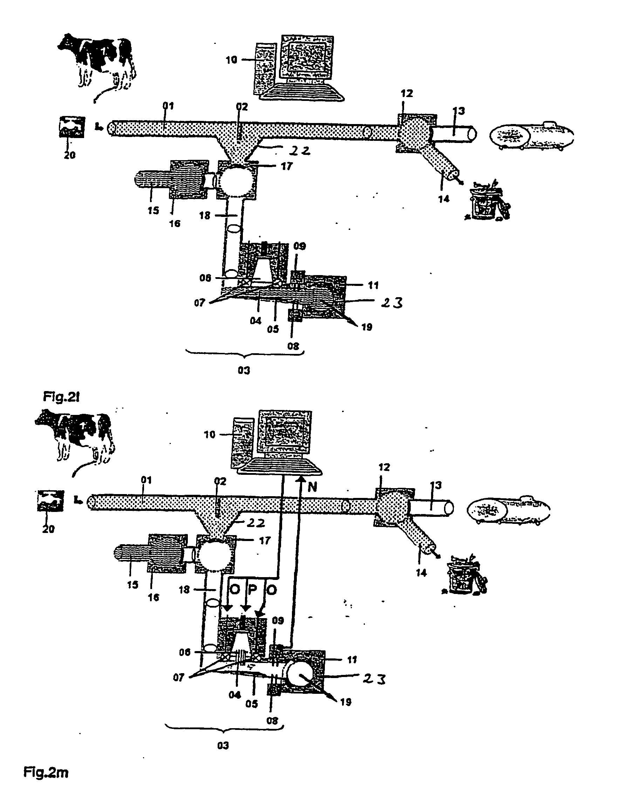

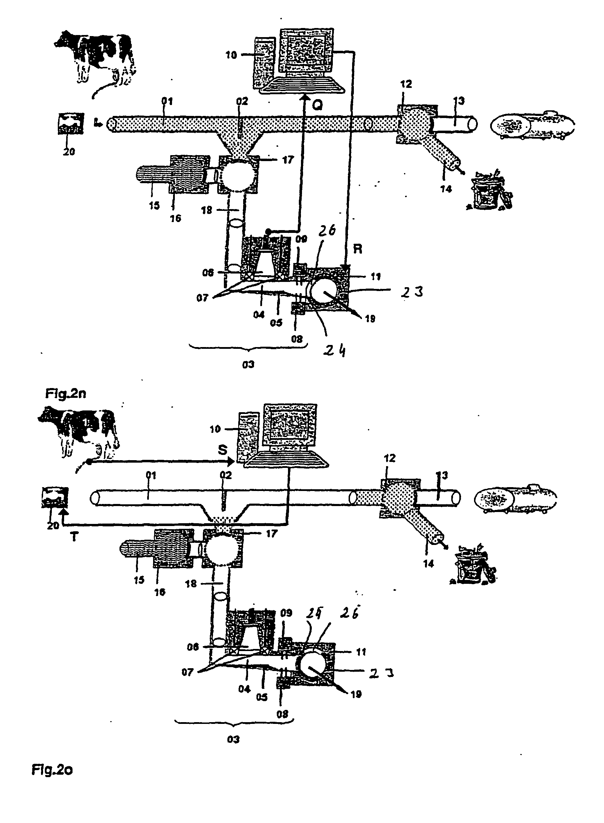

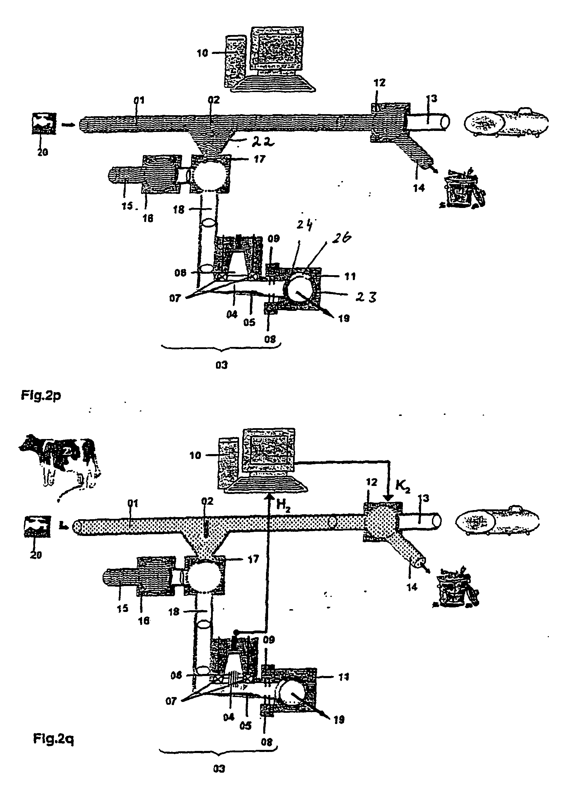

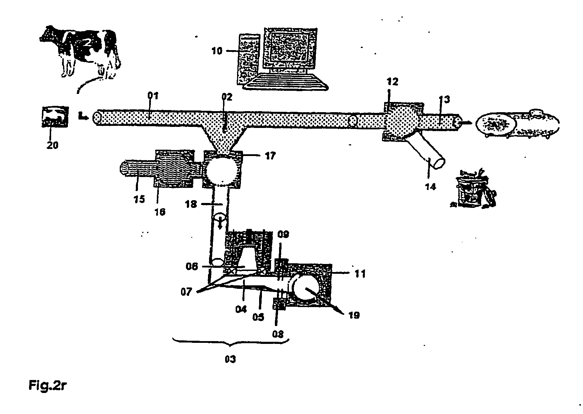

Fig. 2 zeigt eine Ausgangskonfiguration der Vorrichtung zur Selektion von Milch.

In dieser Ausgangskonstellation ist die Ventileinrichtung 12 geschlossen, so dass eine fluidtechnische Verbindung zwischen der Milchleitung 1 und der Leitung für nicht-verwertbare Milch geöffnet und die Verbindung zwischen der Milchleitung 1 und der Leitung 13 für verwertbare Milch unterbrochen ist.

Die Ventileinheit 17 gibt die Zuleitung 18 frei, so das Milch aus der Milchleitung 1 über die Zuleitung 18 zu der Messeinrichtung 3 gelangen kann, wie dies schematisch in der Figur 2a dargestellt ist. Die in der Milchleitung 1 anflutende Milch wird durch den Strömungsleitkörper 2 in das Reservoir 22 und von dort aus in die Leitung 18 abgeleitet.

Der Füllungsstand innerhalb der Messkammer 4 wird durch die Füllungsstandsensoren 8, 9 detektiert. Hat der Füllungsstandsensor 8 einen Mindestfüllungsstand detektiert, sendet dieser Füllungsstandsensor ein Signal A an die Steuereinheit 10, wie dies in der Figur 2c schematisch dargestellt ist. Durch die Steuereinheit 10 wird über ein Signal B die Ventileinheit 17 angesteuert. Sie bewirkt einen Verschluss, so dass der Milchstrom nicht mehr in die Zuleitung 18 gelangen kann, sondern weiter in die Milchleitung 1 geführt wird. Die Milch strömt über die Leitung 14 für nicht-verwertbare Milch und wird verworfen.

Das Volumen der Messkammer 4 ist vorzugsweise so bemessen, dass die Messkammer nach Betätigung der Ventileinheit 17 auch das sich in der Ventileinheit 17 und der Zuleitung 18 befindende Milchvolumen aufnehmen kann.

Fig. 2d zeigt, dass der Milchstrom der ersten Gemelksfraktion die Messkammer 4 vollständig gefüllt hat und von dem Füllungsstandssensor 9, der den Höchstfüllungsstand erkennt, ein Signal C an die Steuereinheit 10 aussendet. Durch ein Signal D steuert die Steuereinheit 10 die Ablaufeinrichtung 11 an.

Wird der Verschlusskörper 23, bei dem es sich um einen zylinderförmigen Verschlusskörper handelt, der eine Öffnung 26 hat, angesteuert. Der Verschlusskörper 23 wird entgegen dem Uhrzeigersinn verdreht, so dass die Öffnung 26 in eine strömungstechnische Verbindung mit der Messkammer 4 gelangt. Die wässrige Phase der in der Messkammer 4 aufgefangenen Milchfraktion strömt dabei über die Ablaufkante 24 in einen Ablauf 19. Dies wird in Figuren 2e und 2f dargestellt. Der Ablauf 19 ist lediglich schematisch dargestellt.

Das Dekantieren der Milch aus der Messkammer 4 führt zu einem Absinken des Flüssigkeitsspiegels in der Messkammer 4. Dies wird von dem Füllungsstandssensor 9 detektiert. Der Sensor 9 sendet ein Signal E in die Steuereinheit 10 (Fig. 2g). Die Steuereinheit 10 aktiviert durch die Signale F und G die Beleuchtungseinheit 7 und die Detektoreinheit 6.

Die Beleuchtungseinheit 7, die mehrere Leuchtmittel enthalten kann, leuchtet die Auflage des Messkammerbodens 25 mit den darauf abgesunkenen Partikeln 21 auf, während die Detektoreinheit 6 die Oberfläche der Auflage 5 mit den sich darauf befindlichen Partikeln 21 detektiert.

Die Information aus der Detektion werden als Signal H₁ an die Steuereinheit 10 geleitet, die aufgrund der detektierten qualitätsbestimmenden Partikel 21 die Ventilstellung der Ventileinrichtung 12 nicht ändert (K₁), so dass der als qualitätsgeminderte Milchstrom weiterhin in die Leitung 14 für nicht-verwertbare Milch abgeführt wird.

Mit dem Signal J steuert die Steuereinheit 10 eine Ventileinheit 16 einer Reinigungseinrichtung 20 an. Ein Reinigungsmittel strömt aus einer Leitung 15 für ein Reinigungsmittel in die Messeinrichtung 3, wie es in der Figur 2j schematisch dargestellt ist.

Während des Melkvorgangs, bei dem ein Milchstrom durch die Milchleitung 1 fließt, wird, wie in der Figur 2k schematisch dargestellt, die Messeinrichtung 3 von einem Reinigungsmittel aus der Leitung 15 für ein Reinigungsmittel durchströmt und dabei die Partikel 21 abgelöst und ausgetragen. Der Reinigungsvorgang wird von dem Flüssigkeitsstandsensor 9 für den Höchstfüllungsstand erkannt. Der Flüssigkeitsstandssensor 9 sendet ein Signal L an die Steuereinheit 10, die daraufhin die Ventileinheit 16 durch ein Signal M veranlasst, durch Verschließen der Leitung für ein Reinigungsmittel den Reinigungsvorgang zu beenden.

Das gesamte Reinigungsmittel fließt über den Ablauf 19 ab. Gegebenenfalls erfolgt die nicht dargestellte Einrichtung eine Zuführung von Luft zur Messeinrichtung 3.

Durch den Flüssigkeitsstandssensor 8 wird die Beendigung des Reinigungsvorgangs über das Signal N an die Steuereinheit 10 gemeldet, die daraufhin durch die Signale Q und P zu mindestens eine Beleuchtungseinheit 7 und die Detektoreinheit 6 aktiviert. Die Detektoreinheit 6 überprüft den Reinigungserfolg. Die Detektoreinheit 6 liefert ein Signal Q, wie in der Figur 2n angedeutet, an die Steuereinheit. Dieses Signal Q wird ausgewertet und festgelegt, ob der Reinigungsvorgang zu wiederholen ist oder, wie in Figur 2n dargestellt, erfolgreich war und daher die Ablaufeinrichtung 11 über das Signal R in die Ausgangsstellung gebracht werden kann.

Ein Ende des Melkvorgangs wird der Steuereinheit 10 ein Signal S übermittelt, dass zum Beispiel von einer Milchflusserkennung, welche nicht dargestellt ist, ausgesendet werden kann. Aufgrund der Detektion von Flocken ist nun die Milchleitung 1 vor dem nächsten Melkvorgang zu reinigen. Die Steuereinheit 10D sendet ein Signal T an eine Reinigungseinrichtung für die Milchleitung, z.B. eine Zwischenspülung 20, damit die Milchleitung 1 von qualitätsmindernden Partikeln befreit werden kann, wie dies in den Figuren 2o und 2p dargestellt ist.

Nach der Reinigung der Milchleitung steht das gesamte System in dem weiteren Vorgang zur Verfügung.

Die Figur 2q zeigt die Momentaufnahme einer Detektion der Oberfläche der Auflage 5 durch die Detektoreinheit 6. Die Detektoreinheit 6 liefert ein Signal H2 an die Steuereinheit 10. Der Informationsgehalt des Signals H2 verspricht der Information, dass keine Flocken bzw. Partikel detektiert worden sind. Über das Signal K2 wird daraufhin die Ventileinrichtung 12 veranlasst, die Leitung für die nicht-verwertbare Milch zu verschließen und die Leitung 13 für verwertbare Milch zu öffnen, damit die als qualitativ einwandfreie erkannte Milch in den Milchsammeltank geleitet werden kann, wie dies schematisch in der Figur 2r dargestellt ist.

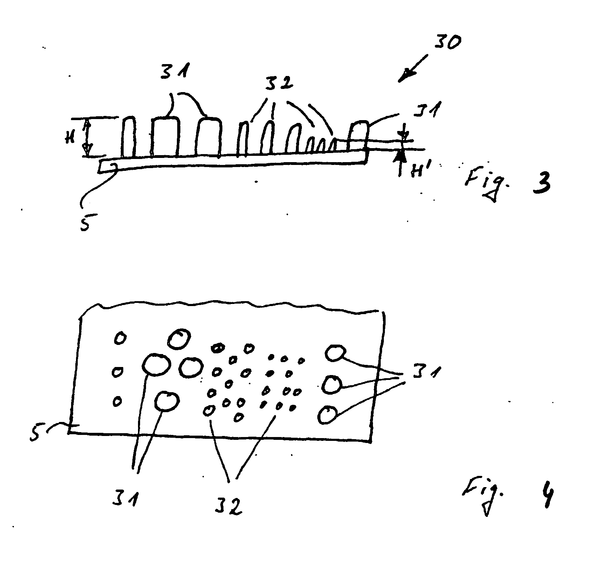

Figur 3 und 4 zeigen schematisch die Ausbildung von Rückhaltemitteln 30. Die Rückhaltemittel 30 sind beispielsweise auf einer Auflage 5, die den Boden der Messkammer 4 bildet, ausgebildet. Die Rückhaltemittel 30 sind in dem dargestellten Ausführungsbeispiel in Form von Makrostrukturen 31 und Mikrostrukturen 32 ausgebildet.

In dem dargestellten Ausführungsbeispiel sind die Makrostrukturen 31 und die Mikrostrukturen 32 im wesentlichen zylinderförmig ausgebildet. Die Makrostrukturen 31 können auch unterschiedliche Formen aufweisen. Die Höhe H der Strukturen kann ebenfalls variieren. Die Anordnung der Mikro- und der Makrostrukturen der Auflage 5 kann einer Verteilung entsprechen. Es können auch Verteilungen der Makro- und Mikrostrukturen vorgenommen werden, die von der Strömungsrichtung der Milch in der Messkammer abhängig sind.

### Bezugszeichenliste

- 1: Milchleitung
- 2: Strömungsleitkörper
- 3: Messeinrichtung
- 4: Messkammer
- 5: Auflage
- 6: Detektoreinheit
- 7: Beleuchtungseinheit
- 8: Füllungsstandssensor
- 9: Füllungsstandssensor
- 10: Steuereinheit
- 11: Ablaufeinrichtung
- 12: Ventileinrichtung
- 13: Leitung für verwertbare Milch
- 14: Leitung für nicht-verwertbare Milch
- 15: Leitung für ein Reinigungsmittel
- 16: Ventileinheit
- 17: Ventileinheit
- 18: Zuleitung
- 19: Ablauf
- 20: Reinigungseinrichtung
- 21: Flocken bzw. Partikel
- 22: Reservoir
- 23: Verschlusskörper
- 24: Ablaufkante
- 25: Boden
- 26: Öffnung
- 30: Rückhaltemittel
- 31: Makrostruktur
- 32: Mikrostruktur

## Patentansprüche

1. Verfahren zur Selektion von Milch, bei dem
ein Milchvolumen eines Milchstroms in eine Messkammer (4) mit wenigstens einer Detektoreinheit (6) geleitet wird,
eine Detektion wenigstens eines Bodenbereichs (25) der Messkammer (4) erfolgt, nach dem wenigstens ein Teil der flüssigen Phase der sich in der Messkammer (4) befindenden Milch über den Bodenbereich (25) hinwegströmend aus der Messkammer (4, 104) abgeleitet wurde,
wobei eine Auswertung der Detektion erfolgt und in Abhängigkeit vom Auswerteergebnis der Milchstrom entweder zum Sammelbehälter für verwertbare Milch geleitet oder verworfen wird, wobei ein Dekantieren wenigstens eines Teils der sich in der Messkammer (4) befindender Milch erfolgt.

2. Verfahren nach Anspruch 1, bei dem das Milchvolumen mit für die flüssige Phase durchlässigen Rückhaltemitteln (30) in Kontakt gebracht wird.

3. Verfahren nach Anspruch 2, bei dem die Rückhaltemittel (30) durch Makro- und/oder Mikrostrukturen (31, 32) gebildet sind, zwischen denen wenigstens ein Teil der flüssigen Phase abgeleitet wird.

4. Verfahren nach Anspruch 2 oder 3, bei dem die flüssige Phase innerhalb einer vorgegebenen Zeitspanne aus der Messkammer (4) abgeleitet wird.

5. Verfahren nach einem der Ansprüche 1 bis 4, bei dem der Milchstrom, nach Einleitung des Milchvolumens, an der Messkammer (4) vorbei geführt wird.

6. Verfahren nach Anspruch 5, bei dem der Milchstrom in einer Bypass-Leitung an der Messkammer (4) vorbei geführt wird.

7. Verfahren nach einem der Ansprüche 1 bis 6, bei dem vor einer jeden Detektion wenigstens die Messkammer (4) gegenüber einem Milchstrom abgeschlossen und gegebenenfalls gereinigt wird.

8. Verfahren nach einem der Ansprüche 1 bis 7, bei dem der Milchstrom in einer Milchleitung (1) geführt wird, die über eine Zuleitung (18) mit der von der Messkammer (4) verbunden ist, wobei in der Zuleitung (18) eine Ventileinheit (17) angeordnet ist, durch die eine strömungstechnische Verbindung zwischen der Milchleitung (1) und der Messkammer (4) unterbrochen wird.

9. Verfahren nach einem der Ansprüche 1 bis 8, bei dem der Milchstrom in einen Zwischenspeicher geleitet und nach erfolgter Auswertung der Detektion in Abhängigkeit vom Auswerteergebnis aus dem Zwischenspeicher entweder in eine Leitung (13) für verwertbare Milch oder in eine Leitung (14) für nicht-verwertbare Milch geführt wird.

10. Verfahren nach einem der Ansprüche 1 bis 8, bei dem der Milchstrom während der Detektion verworfen wird.

11. Verfahren nach einem der Ansprüche 1 bis 10, bei dem der Milchstrom vor der Messkammer (4) in einer Beruhigungsstrecke beruhigt wird.

12. Verfahren nach einem der Ansprüche 1 bis 11, bei dem ein Abstand und/oder die Lage zwischen dem Bodenbereich (25) der Messkammer (4) und einer Ablaufkante (24) einer Ablauföffnung (26) relativ zueinander veränderbar ist.

13. Verfahren nach einem der Ansprüche 1 bis 12, bei dem nach erfolgten Detektion und vorzugsweise nach einer Entleerung der Messkammer (4) ein Reinigungsvorgang der Messkammer (4) durchgeführt wird.

14. Verfahren nach Anspruch 13, bei dem während des Reinigungsvorgangs wenigstens ein Reinigungsmittel durch die Messkammer (4) geführt wird.

15. Verfahren nach Anspruch 14, bei dem nach dem wenigstens einem Reinigungsmittel Luft durch die Messkammer (4) hindurchgeführt wird.

16. Verfahren nach Anspruch 15, bei dem die Luft im wesentlichen frei von makroskopischen Partikeln ist.

17. Verfahren nach Anspruch 15 oder 16, bei dem erwärmte Luft durch die Messkammer (4) hindurchgeführt wird.

18. Verfahren nach einem der Ansprüche 13 bis 17, bei dem ein Reinigungsmittel entgegengesetzt zur Strömungsrichtung des Milchstroms mindestens den wenigstens einen Filter (105) durchströmt.

19. Verfahren nach einem der Ansprüche 13 bis 18, bei dem vor und nach der Messkammer (4) jeweils eine Ventileinrichtung vorgesehen ist, die die Zu- und Ableitung des Reinigungsmittels aus einer Leitung für Reinigungsmittel ermöglicht und die durch eine Steuereinheit gesteuert werden.

20. Verfahren nach einem der Ansprüche 1 bis 19, bei dem vor und nach der Messkammer (4) jeweils eine Ventileinrichtung vorgesehen ist, die die Messkammer (4) von der Milchleitung abschließt und die durch eine Steuereinheit gesteuert werden.

21. Verfahren nach einem der Ansprüche 1 bis 20, bei dem vor der Messkammer (4) eine Milchflusserkennung erfolgt.

22. Verfahren nach einem der Ansprüche 13 bis 21, bei dem der Reinigungserfolg der Messkammer (4) durch Detektion überprüft wird und in Abhängigkeit vom Auswerteergebnis die Reinigung wiederholt werden kann.

23. Verfahren nach einem der Ansprüche 1 bis 22, bei dem die Detektion optisch erfolgt.

24. Verfahren nach einem der Ansprüche 1 bis 23, bei dem die Auswertung der Detektion mit Hilfe von mindestens einem Bildanalyseprogramm oder/und mindestens einem Bildbearbeitungsprogramm oder/und mindestens einem Bildverarbeitungs-Programm erfolgt, das/die geeignet ist/sind, durch mindestens einen zu bestimmenden Algorithmus ergänzt zu werden, die geeignet sind, durch zu bestimmende Elemente der Fuzzy Logic ergänzt oder/und miteinander verbunden zu werden.

25. Vorrichtung zur Selektion von Milch mit
einer Milchleitung (1),
einer mit der Milchleitung (1) verbundenen Messeinrichtung (3), die eine Messkammer (4) mit einem Bodenbereich (25) und mit wenigstens einer Detektoreinheit (6) aufweist und mit einer Steuereinheit (10), die mit der Detektoreinheit (6) verbunden ist,
wobei
die Messkammer (4) so ausgebildet ist, dass wenigstens ein Teil einer flüssigen Phase der Milch über den Bodenbereich (25) hinwegströmend aus der Messkammer (4) abgeleitet wird, und dass eine, durch die Steuereinheit (10) steuerbare Ventileinrichtung (12) vorgesehen, durch die in Abhängigkeit von dem Ergebnis einer Detektion eine Leitung (13) für die verwertbare Milch oder eine Leitung (14) für die nicht-verwertbare Milch freigegeben wird,
**dadurch gekennzeichnet, dass**, die Messkammer (4) Rückhaltemittel (30) aufweist, die im Bodenbereich (25) der Messkammer (4) vorgesehen sind, die Messeinrichtung (3) eine Ablaufeinrichtung (11) aufweist, die einen beweglichen Verschlusskörper (23) mit einer Ablaufkante (24) hat, so dass bei einer Bewegung des Verschlusskörpers (23) die Ablaufkante (24) eine im wesentlichen vertikale Lageveränderung durchführt.

26. Vorrichtung nach Anspruch 25, **dadurch gekennzeichnet, dass** die Rückhaltemittel (30) durch Strukturen, insbesondere Makro- und/oder Mikrostrukturen (31, 32) gebildet sind.

27. Vorrichtung nach Anspruch 26, **dadurch gekennzeichnet, dass** die Höhe (H) der Strukturen (31, 32) bis zum 1 cm, vorzugsweise bis zu 0,8 cm, insbesondere 0,5 cm, beträgt.

28. Vorrichtung nach Anspruch 26 oder 27, **dadurch gekennzeichnet, dass** der Abstand (A) der Strukturen (31, 32) zueinander bis zum 1 cm, vorzugsweise bis zu 0,8 cm, insbesondere 0,5 cm, beträgt.

29. Vorrichtung nach einem der Ansprüche 25 bis 28, **dadurch gekennzeichnet, dass** ein Strömungsleitkörper (2) in der Milchleitung (1) vorgesehen ist, durch den ein Milchstrom zu der Messeinrichtung (3) hin geleitet wird.

30. Vorrichtung nach Anspruch 29, **dadurch gekennzeichnet, dass** der Strömungsleitkörper (2) lageveränderlich in der Milchleitung (1) angeordnet ist.

31. Vorrichtung nach einem der Ansprüche 25 bis 30, **dadurch gekennzeichnet, dass** zwischen der Milchleitung (1) und der Messeinrichtung (3) ein Reservoir (22) vorgesehen ist.

32. Vorrichtung nach einem der Ansprüche 25 bis 31, **dadurch gekennzeichnet, dass** stromabwärts der Messeinrichtung (3) ein Zwischenspeicher vorgesehen ist, der mit der Milchleitung (1), einer Leitung (13) für verwertbare Milch und mit einer Leitung (14) für nicht-verwertbare Milch verbunden ist, wobei nach erfolgter Auswertung der Detektion in Abhängigkeit vom Auswerteergebnis Milch aus dem Zwischenspeicher entweder in die Leitung (13) für verwertbare Milch oder in die Leitung (14) für nicht-verwertbare Milch geführt wird.

33. Vorrichtung nach einem der Ansprüche 25 bis 32, **dadurch gekennzeich net, dass** die Messeinrichtung (3) über eine Zuleitung (18) mit der Milchleitung (1) verbunden und in der Zuleitung (18) eine Ventileinheit (17) angeordnet ist.

34. Vorrichtung nach einem der Ansprüche 25 bis 33, **dadurch gekennzeichnet, dass** die Ablaufeinrichtung (11) mit der Steuereinheit (10) verbunden ist.

35. Vorrichtung nach einem der Ansprüche 25 bis 34, **dadurch gekennzeichnet, dass** in der Messkammer (3) einen der Detektoreinheit (4) gegenüberliegenden Bereich aufweist, der aus einer Horizontalen ausgelenkt ist.

36. Vorrichtung nach einem der Ansprüche 25 bis 35, **dadurch gekennzeichnet, dass** die Messkammer (4) und/oder ein der Detektoreinheit (6) gegenüberliegender Bereich um eine im wesentlichen horizontal verlaufende Achse auslenkbar ist.

37. Vorrichtung nach einem der Ansprüche 25 bis 36, **dadurch gekennzeichnet, dass** die Messkammer (4) einen der Detektoreinheit (6) gegenüberliegenden Bereich aufweist und die Detektoreinheit (6) und der Bereich relativ zueinander beweglich sind.

38. Vorrichtung nach Anspruch 35, 36 oder 37, **dadurch gekennzeichnet, dass** der der Detektoreinheit (6) gegenüberliegenden Bereich durch eine Auflage (5) gebildet ist.

39. Vorrichtung nach einem der Ansprüche 25 bis 38, **dadurch gekennzeichnet, dass** diese eine Reinigungseinrichtung aufweist.

40. Vorrichtung nach Anspruch 41, **dadurch gekennzeichnet, dass** eine Leitung (15) für ein Reinigungsmittel vorgesehen ist, die mit der Zuleitung (18) bzw. mit dem Ablauf verbunden ist.

41. Vorrichtung nach einem der Ansprüche 25 bis 40, **dadurch gekennzeichnet, dass** die Messkammer (6) ein Bestandteil eines Dekanters ist.

42. Vorrichtung nach einem der Ansprüche 25 bis 41 **gekennzeichnet durch** eine Bypass-Leitung, so dass der Milchstrom wahlweise **durch** die Messeinrichtung oder wenigstens teilweise **durch** die Bypass-Leitung geführt wird und **durch** eine stromabwärts der Mündung der Bypass-Leitung in der Milchleitung angeordneten, **durch** die Steuereinheit (107) steuerbare Ventileinrichtung, **durch** die in Abhängigkeit von dem Ergebnis der Detektion eine Leitung für die verwertbare Milch oder eine Leitung für die nicht verwertbare Milch freigegeben wird.

43. Vorrichtung nach einem der Ansprüche 25 bis 42, **dadurch gekennzeichnet, dass** diese eine mit der Messeinrichtung (3), insbesondere mit der Messkammer (4) zusammenwirkende Vibrationseinrichtung aufweist.

44. Vorrichtung nach einem der Ansprüche 25 bis 43, **dadurch gekennzeichnet, dass** die Messeinrichtung (3) einen Separator aufweist.

45. Vorrichtung nach einem der Ansprüche 25 bis 44, **dadurch gekennzeichnet, dass** die Wandung der Messkammer (4) wenigstens teilweise hydrophob ausgebildet ist.

46. Vorrichtung nach einem der Ansprüche 26 bis 45, **dadurch gekennzeichnet, dass** die Oberfläche der Rückhaltemittel (30) wenigstens teilweise haftend ausgebildet ist.

47. Vorrichtung nach einem der Ansprüche 26 bis 46, **dadurch gekennzeichnet, dass** die Rückhaltemittel (30), insbesondere die Strukturen, vorzugsweise die Makro- und/oder Mikrostrukturen (31, 32) verstellbar ausgebildet sind.

## Claims

1. Method for the selection of milk in which a volume of milk of a milk flow is conveyed into a measuring chamber (4) with at least one detector unit (6), at least one floor region (25) of the measuring chamber (4) is detected, after which at least a portion of the liquid phase of the milk present in the measuring chamber (4) is discharged out of the measuring chamber (4, 104), flowing out via the floor region (25), the detection process being evaluated and, depending on the result of the evaluation, the milk flow being either conveyed to the collecting container for usable milk or discarded, wherein at least a portion of the milk present in the measuring chamber (4) is decanted.

2. Method according to claim 1, in which the milk volume is brought into contact with retention means (30) which are permeable to the liquid phase.

3. Method according to claim 2, in which the retention means (30) are formed by macro and/or microstructures (31, 32) between which at least a portion of the liquid phase is discharged.

4. Method according to either claim 2 or claim 3, in which the liquid phase is discharged out of the measuring chamber (4) within a predetermined period of time.

5. Method according to any one of claims 1 to 4, in which, after introducing the milk volume, the milk flow is conveyed past the measuring chamber (4).

6. Method according to claim 5, in which the milk flow is conveyed past the measuring chamber (4) in a bypass pipe.

7. Method according to any one of claims 1 to 6, in which at least the measuring chamber (4) is sealed against a milk flow and optionally cleaned before every detection process.

8. Method according to any one of claims 1 to 7, in which the milk flow is conveyed in a milk pipe (1) which is connected via a supply pipe (18) to that of the measuring chamber (4), a valve unit (17) being arranged in the supply pipe (18) by means of which a flow connection between the milk pipe (1) and the measuring chamber (4) is disconnected.

9. Method according to any one of claims 1 to 8, in which the milk flow is conveyed into an intermediate storage device and is conveyed out of the intermediate storage device either into a pipe (13) for usable milk or into a pipe (14) for non-usable milk, after the detection process is evaluated and depending on the result of the evaluation.

10. Method according to any one of claims 1 to 8, in which the milk flow is discarded during the detection process.

11. Method according to any one of claims 1 to 10, in which the milk flow is calmed in a calming section before the measuring chamber (4).

12. Method according to any one of claims 1 to 11, in which a distance and/or the position between the floor region (25) of the measuring chamber (4) and a discharge edge (24) of a discharge aperture (26) can be altered relative to one another.

13. Method according to any one of claims 1 to 12, in which, after detection has taken place and preferably after emptying the measuring chamber (4), the measuring chamber (4) undergoes a cleaning process.

14. Method according to claim 13, in which during the cleaning process at least one cleaning agent is conveyed through the measuring chamber (4).

15. Method according to claim 14, in which air is conveyed through the measuring chamber (4) after the at least one cleaning agent.

16. Method according to claim 15, in which the air is substantially free of macroscopic particles.

17. Method according to either claim 15 or claim 16, in which heated air is conveyed through the measuring chamber (4).

18. Method according to any one of claims 13 to 17, in which a cleaning agent flows through the at least one filter (105) counter to the flow direction of the milk flow.

19. Method according to any one of claims 13 to 18, in which one respective valve device is provided before and after the measuring chamber (4) which valve device allows the supply and discharge of the cleaning agent from a pipe for a cleaning agent and is controlled by a control unit.

20. Method according to any one of claims 1 to 19, in which one respective valve device is provided before and after the measuring chamber (4) which valve device seals the measuring chamber (4) from the milk pipe and is controlled by a control unit.

21. Method according to any one of claims 1 to 20, in which the milk flow is identified before the measuring chamber (4).

22. Method according to any one of claims 13 to 21, in which the successful cleaning of the measuring chamber (4) is checked by detection and, depending on the result of the evaluation, the cleaning can be repeated.

23. Method according to any one of claims 1 to 22, in which the detection process is carried out visually.

24. Method according to any one of claims 1 to 23, in which the evaluation of the detection process is carried out with the aid of at least one image analysis program or/and at least one image editing program or/and at least one image processing program which is/are able to be supplemented by at least one algorithm to be determined and which are able to be supplemented by fuzzy logic elements to be determined and/or connected to one another.

25. Device for the selection of milk comprising a milk pipe (1), a measuring device (3) connected to the milk pipe (1) and which includes a measuring chamber (4) with a floor region (25) and with at least one detector unit (6) and with a control unit (10) which is connected to the detector unit (6), the measuring chamber (4) being configured such that at least a portion of a liquid phase of the milk is discharged out of the measuring chamber (4), flowing out via the floor region (25), and that a valve device (12) which can be controlled by the control unit (10) is provided, by means of which a pipe (13) for the usable milk or a pipe (14) for the non-usable milk is opened up depending on the result of detection, **characterised in that** the measuring chamber (4) comprises retention means (30) which are provided in the floor region (25) of the measuring chamber (4), the measuring device (3) comprises a discharge device (11) which has a movable closing body (23) with a discharge edge (24), so that when the closing body (23) moves, the position of the discharge edge (24) is altered substantially vertically.

26. Device according to claim 25, **characterised in that** the retention means (30) are formed by structures, in particular macro and/or micro structures (31, 32).

27. Device according to claim 26, **characterised in that** the height (H) of the structures (31, 32) is up to 1 cm, preferably up to 0.8 cm, in particular 0.5 cm.

28. Device according to either claim 26 or claim 27, **characterised in that** the distance (A) between the structures (31, 32) is up to 1 cm, preferably up to 0.8 cm, in particular 0.5 cm.

29. Device according to any one of claims 25 to 28, **characterised in that** a flow guiding body (2), by means of which a milk flow is conveyed toward the measuring device (3), is provided in the milk pipe (1).

30. Device according to claim 29, **characterised in that** the flow guiding body (2) is arranged in an adjustable position in the milk pipe (1).

31. Device according to any one of claims 25 to 30, **characterised in that** a reservoir (22) is provided between the milk pipe (1) and the measuring device (3).

32. Device according to any one of claims 25 to 31, **characterised in that** downstream of the measuring device (3) an intermediate storage device is provided which is connected to the milk pipe (1) of a pipe (13) for usable milk and to a pipe (14) for non-usable milk, milk being conveyed out of the intermediate storage device either into the pipe (13) for usable milk or into the pipe (14) for non-usable milk, after the detection process has been evaluated and depending on the result of the evaluation.

33. Device according to any one of claims 25 to 32, **characterised in that** the measuring device (3) is connected to the milk pipe (1) via a supply pipe (18) and a valve device (17) is arranged in the supply pipe (18).

34. Device according to anyone of claims 25 to 33 , **characterised in that** the discharge device (11) is connected to the control unit (10).

35. Device according to any one of claims 25 to 34, **characterised in that** the measuring chamber (3) comprises a region opposing the detector unit (4) and which is pivoted from a horizontal position.

36. Device according to any one of claims 25 to 35, **characterised in that** the measuring chamber (4) and/or a region opposing the detector unit (6) can be pivoted about an axis extending substantially horizontally.

37. Device according to any one of claims 25 to 36, **characterised in that** the measuring chamber (4) comprises a region opposing the detector unit (6), and the detector unit (6) and the region are movable relative to one another.

38. Device according to claim 35, 36 or 37, **characterised in that** the region opposing the detector unit (6) is formed by a covering (5).

39. Device according to any one of claims 25 to 38, **characterised in that** said device comprises a cleaning device.

40. Device according to claim 39, **characterised in that** a pipe (15) is provided for a cleaning agent which is connected to the pipe (18) and to the drain.

41. Device according to any one of claims 25 to 40, **characterised in that** the measuring chamber (6) is a component of a decanter.

42. Device according to any one of claims 25 to 41, **characterised by** a bypass pipe, so that the milk flow is optionally conveyed by the measuring device or at least partially by the bypass pipe and by a valve device which can be controlled by the control unit (107) and arranged downstream of the outlet of the bypass pipe in the milk pipe and by means of which a pipe for the usable milk or a pipe for the non-usable milk is opened depending on the result of the detection process.

43. Device according to any one of claims 25 to 42, **characterised in that** said device comprises a vibration device cooperating with the measuring device (3), in particular with the measuring chamber (4).

44. Device according to any one of claims 25 to 42, **characterised in that** the measuring device (3) comprises a separator.

45. Device according to any one of claims 25 to 42, **characterised in that** the wall of the measuring chamber (4) is configured to be at least partially hydrophobic.

46. Device according to any one of claims 26 to 45, **characterised in that** the surface of the retention means (30) is configured to be at least partially adhesive.

47. Device according to any one of claims 26 to 46, **characterised in that** the retention means (30), in particular the structures, preferably the macro and/or microstructures (31, 32), are configured to be adjustable.

## Revendications

1. Procédé pour la sélection de lait, dans lequel un volume de lait d'un flux de lait est conduit dans une chambre de mesure (4) avec au moins une unité de détecteur (6), une détection d'au moins une région de fond (25) de la chambre de mesure (4) est effectuée, après qu'au moins une partie de la phase liquide du lait se trouvant dans la chambre de mesure (4) a été évacuée hors de la chambre de mesure (4, 104) en s'écoulant par-dessus la région de fond (25), une analyse de la détection étant effectuée et le flux de lait étant soit conduit vers le récipient collecteur pour le lait utilisable, soit étant rejeté, en fonction du résultat d'analyse, dans lequel la phase liquide est évacuée de la chambre de mesure (4) à l'intérieur d'un espace de temps prédéterminé.

2. Procédé selon la revendication 1, dans lequel le volume de lait est mis en contact avec des moyens de retenue (30) perméables à la phase liquide.

3. Procédé selon la revendication 2, dans lequel les moyens de retenue (30) sont formés par des macro- et/ou des microstructures (31, 32), entre lesquelles au moins une partie de la phase liquide est évacuée.

4. Procédé selon la revendication 2 ou 3, dans lequel la phase liquide est évacuée de la chambre de mesure (4) à l'intérieur d'un espace de temps prédéterminé.

5. Procédé selon l'une des revendications 1 à 4, dans lequel, après avoir introduit le volume lait, le flux de lait est guidé à coté de la chambre de mesure (4).

6. Procédé selon la revendication 5, dans lequel le flux de lait est guidé à coté de la chambre de mesure (4) dans une conduite de dérivation.

7. Procédé selon l'une des revendications 1 à 6, dans lequel avant chaque détection au moins la chambre de mesure (4) est fermée contre un flux de lait et le cas échéant est nettoyée.

8. Procédé selon l'une des revendications 1 à 7, dans lequel le flux de lait est guidé dans une conduite de lait (1) qui est reliée à la chambre de mesure (4) à l'intermédiaire d'une conduite d'alimentation (18), une unité de valve (17) étant agencée dans la conduite d'alimentation (18), par laquelle une connexion de flux entre la conduite de lait (1) et la chambre de mesure (4) est interrompue.

9. Procédé selon l'une des revendications 1 à8, dans lequel le flux de lait est guidé dans un réservoir intermédiaire et après l'analyse de la détection est conduit en fonction du résultat d'analyse hors du réservoir intermédiaire soit dans une conduite (13) pour le lait utilisable, soit dans une conduite (14) pour le lait non utilisable.

10. Procédé selon l'une des revendications 1 à 8, dans lequel le flux de lait est rejeté durant la détection.

11. Procédé selon l'une des revendications 1 a 10, dans lequel le flux de lait est apaisé dans un trajet d'apaisement en amont de la chambre de mesure (4).

12. Procédé selon l'une des revendications 1 à 11, dans lequel une distance et/ou la position entre la région de fond (25) de la chambre de mesure (4) et un rebord d'écoulement (24) d'un orifice d'écoulement (26) est modifiable relativement l'un à l'autre.

13. Procédé selon l'une des revendications 1 à 12, dans lequel une opération de nettoyage de la chambre de mesure (4) est effectuée après avoir effectué la détection et de préférence après un vidage de la chambre de mesure (4).

14. Procédé selon la revendication 13, dans lequel durant l'opération de nettoyage au moins un agent de nettoyage est guidé à travers la chambre de mesure (4).

15. Procédé selon la revendication 14, dans lequel après l'au moins un agent de nettoyage de l'air est guidé à travers la chambre de mesure (4).

16. Procédé selon la revendication 15, dans lequel l'air est sensiblement exempt de particules macroscopiques.

17. Procédé selon la revendication 15 ou 16, dans lequel de l'air chauffé est guidé à travers la chambre de mesure (4).

18. Procédé selon l'une des revendications 13 à 17, dans lequel un agent de nettoyage s'écoule de manière opposée au sens d'écoulement du flux de lait au moins à travers l'au moins un filtre (105).

19. Procédé selon l'une des revendications 13 à 18, dans lequel respectivement une installation de valve est prévue devant et derrière la chambre de mesure (4), lesquelles installations de valve permettent l'amenée et l'évacuation de l'agent de nettoyage d'une conduite pour agents de nettoyage et lesquelles sont commandées par une unité de commande.

20. Procédé selon l'une des revendications 1 à 19, dans lequel respectivement une installation de valve est prévue devant et derrière la chambre de mesure (4), lesquelles installations de valve ferment la chambre de mesure (4) contre la conduite de lait et lesquelles sont commandées par une unité de commande.

21. Procédé selon l'une des revendications 1 à 20, dans lequel une identification du flux de lait est effectuée en amont de la chambre de mesure (4).

22. Procédé selon l'une des revendications 13 à 21, dans lequel le succès de nettoyage de la chambre de mesure (4) es examiné par détection et dans lequel le nettoyage peut être répété en fonction du résultat d'analyse.

23. Procédé selon l'une des revendications 1 à 22, dans lequel la détection est effectuée optiquement.

24. Procédé selon l'une des revendications 1 à 23, dans lequel l'analyse de la détection est effectué à l'aide d'au moins un programme d'analyse d'image ou/et d'au moins un programme de traitement d'images qui est/sont approprié(s) à être complété(s) par un algorithme devant être déterminé, et qui sont appropriés à être complétés ou/et reliés les uns aux autres par des éléments de logique floue.

25. Dispositif pour la sélection de lait comprenant
une conduite de lait (1),
une installation de mesure (3) reliée à la conduite de lait (1), l'installation de mesure présentant une chambre de mesure (4) avec une région de fond (25) et avec au moins une unité de détecteur (6) et
une unité de commande (10) qui est reliée à l'unité de détecteur (6), dans quel cas la chambre de mesure (4) est réalisée de telle manière qu'au moins une partie d'une phase liquide du lait est évacuée hors de la chambre de mesure (4) en s'écoulant par-dessus la région de fond (2 5) et qu'une installation de valve (12) est prévue qui peut être commandée par l'unité de commande (10) et grâce à laquelle une conduite (13) pour le lait utilisable ou une conduite (14) pour le lait non utilisable est libérée en fonction du résultat d'une détection, **caractérisé en ce que** la chambre de mesure (4) a des moyens de retenue (30), qui sont prévus dans la région de fond (25) de la chambre de mesure (4), l'installation de mesure (3) présente une installation d'écoulement (11) qui a un corps d'obturation mobile (23) avec un rebord d'écoulement (24), de sorte que lorsque un mouvement du corps d'obturation (23) a lieu le rebord d'écoulement (24) effectue un changement de position sensiblement vertical.

26. Dispositif selon la revendication 25, **caractérisé en ce que** les moyens de retenue (30) sont formés par des structures, notamment des macro- et/ou des microstructures (31, 32).

27. Dispositif selon la revendication 26, **caractérisé en ce que** la hauteur (H) des structures (31, 32) comporte jusqu'à 1 cm, de préférence jusqu'à 0,8 cm, notamment 0,5 cm.

28. Dispositif selon la revendication 26 ou 27, **caractérisé en ce que** la distance (A) des structures (31, 32) entre elles comporte jusqu'à 1 cm, de préférence jusqu'à 0,8 cm, notamment 0,5 cm.

29. Dispositif selon l'une des revendications 25 à 28, **caractérisé en ce qu'**un corps de guidage de flux (2) est prévu dans la conduite de lait (1) par lequel un flux de lait est conduit vers l'installation de mesure (3).

30. Dispositif selon la revendication 29, **caractérisé en ce que** le corps de guidage de flux (2) est agencé dans la conduite de lait (1) de manière à pouvoir être changé de position.

31. Dispositif selon l'une des revendications 25 à 30, **caractérisé en ce qu'**un réservoir (22) est prévu entre la conduite de lait (1) et l'installation de mesure (4).

32. Dispositif selon l'une des revendications 25 à 31, **caractérisé en ce qu'**un réservoir intermédiaire est prévu en aval de l'installation de mesure (3), lequel réservoir intermédiaire est relié à une conduite de lait (1), à une conduite (13) pour le lait utilisable et à une conduite (14) pour le lait non utilisable, après l'analyse de la détection du lait étant guidé en fonction du résultat d'analyse hors du réservoir intermédiaire soit dans la conduite (13) pour le lait utilisable, soit dans la conduite (14) pour le lait non utilisable.

33. Dispositif selon l'une des revendications 25 à 32, **caractérisé en ce que** l'installation de mesure (3) est reliée à la conduite de lait (1) à l'intermédiaire d'une conduite d'alimentation (18) et qu'une unité de valve (17) est agencée dans la conduite d'alimentation (18).

34. Dispositif selon l'mèdes revendications 25 à 34, **caractérisé en ce que** l'installation d'écoulement (11) est reliée à l'unité de commande (10).

35. Dispositif selon l'une des revendications 25 à 34, **caractérisé en ce que** la chambre de mesure (3) a une région en vis-à-vis de l'unité de détecteur (4), laquelle région est déviée hors d'une horizontale.

36. Dispositif selon l'une des revendications 25 à 35, **caractérisé en ce que** la chambre de mesure (4) et/ou une région en vis-à-vis de l'unité de détecteur (6) peut être dévié autour d'un axe s'étendant sensiblement horizontalement.

37. Dispositif selon l'une des revendications 25 à 36, **caractérisé en ce que** la chambre de mesure (4) a une région en vis-à-vis de l'unité de détecteur (6) et que l'unité de détecteur (6) et la région sont mobiles relativement l'une par rapport à l'autre.

38. Dispositif selon la revendication 35, 36 ou 37, **caractérisé en ce que** la région en vis-à-vis de l'unité de détecteur (6) est formée par un appui (5).

39. Dispositif selon l'une des revendications 25 à 38, **caractérisé en ce que** celui-ci a une installation de nettoyage.

40. Dispositif selon la revendication 39, **caractérisé en ce qu'**une conduite (15) pour un agent de nettoyage est prévue qui est reliée à la conduite d'alimentation (18), respectivement à l'orifice sortie.

41. Dispositif selon l'une des revendications 25 à 40, **caractérisé en ce que** la chambre de mesure (6) est un composant d'un appareil à décanter.

42. Dispositif selon l'une des revendications 25 à 41, **caractérisé par** une conduite de dérivation, de sorte que le flux de lait est guidé au choix à travers l'installation de mesure ou au moins partiellement à travers la conduite de dérivation et à travers une installation de valve qui est agencée en aval de l'embouchure de la conduite de dérivation dans la conduite de lait et qui peut être commandée par l'unité de commande (107), par laquelle installation de valve une conduite pour le lait utilisable ou une conduite pour le lait non utilisable est libérée en fonction du résultat de la détection.

43. Dispositif selon l'une des revendications 25 a 42, **caractérisé en ce que** celui-ci a une installation de vibration coopérant avec l'installation de mesure (3), notamment avec la chambre de mesure (4).

44. Dispositif selon l'une des revendications 25 à 43, **caractérisé en ce que** l'installation de mesure (3) a un séparateur.

45. Dispositif selon l'une des revendications 25 à 44, **caractérisé en ce que** la paroi de la chambre de mesure (4) est réalisée au moins partiellement de manière hydrophobe.

46. Dispositif selon l'une des revendications 26 à 45, **caractérisé en ce que** la surface des moyens de retenue (30) est réalisée au moins partiellement de manière adhérente.

47. Dispositif selon l'une des revendications 26 à 46, **caractérisé en ce que** les moyens de retenue (30), notamment les structures, de préférence les macro- et/ou les microstructures (31, 32), sont réalisées de manière ajustable.
